# EUROPEAN PATENT APPLICATION

(11) **EP 2 390 774 A2**
(43) Date of publication of application: **30.11.2011**
(21) Application number: 11156953.9
(22) Date of filing: 04.03.2011
(51) Int. Cl.: G06F 3/048

(54) **Information display device, information display method, and program**

(30) Priority: 24.05.2010 JP 2010117916
(71) Applicant: Aisin AW Co., Ltd., Aichi-ken 444-1192 (JP)
(72) Inventor: Ogawa, Tsuyoshi, Anjo-shi, Aichi-ken 444-1192 (JP); Yamamoto, Kazuyoshi, Anjo-shi, Aichi-ken 444-1192 (JP); Sakai, Takamitsu, Anjo-shi, Aichi-ken 444-1192 (JP)
(74) Representative: Intès, Didier Gérard André

(57) **Abstract**

An information display device includes: a display unit (15) that displays an image (51); a coordinate detection unit that detects a pressed coordinate position (61, 61A, 61B) pressed by a finger on a display screen (18) of the display unit (15); a determination unit that determines the number of fingers pressing the display screen (18); a control volume setting unit that sets a control volume to scroll the image (51) based on a movement direction and a movement speed (VA, VB) of the pressed coordinate position (61, 61A, 61B) just before pressing the display screen (18) by the finger is cancelled and a determination result of the determination unit; and a scroll control unit that scrolls the image (51) for the control volume set by the control volume setting unit.

## Description

The disclosure of Japanese Patent Application No.2010-117916 filed on May 24, 2010, including the specification, drawings and abstract thereof, is incorporated herein by reference in its entirety.

### BACKGROUND OF THE INVENTION

### 1. Field of the Invention

The present invention relates to an information display device, an information display method, and a program that inertia-scroll an image based on a pressing operation on a display screen.

### 2. Description of the Related Art

In recent years, portable electronic devices such as a cellular phone, a PDA (Personal Digital Assistant), an electronic dictionary, and a music player are prevalent. In order to downsize an operation part that a user operates, widely-used portable electronic devices include a transparent-type touch panel that detects a touch and a touched point in front of a display. On the transparent-type touch panel, the user can perform an input, looking at a display screen on the display where selection items to select icons, file names, and the like are displayed, and touching a part of the touch panel that corresponds to a display position of each item. Although the portable electronic devices have a display screen with a small area, more and more selection items such as the icons, the file names, and the like are getting displayable along with improvement of resolution of the display screen.

In addition, display devices are used, in which, in displaying an image whose size is over the display screen, a display area to display on the display screen is set to a part of the area of the image, and a scroll display is performed by moving the display area on the image when the user touches the touch panel provided in front of the display screen. For example, there is a scroll control device configured to perform scroll display that scrolls a screen based on a change vector of an input coordinate just before pressing is cancelled and stops the screen by gradually reducing a scroll amount, when the user presses and flicks the touch panel with a finger (hereinafter referred to as a "flick operation") (refer to Japanese Patent Application; Publication No. JP-A- 10-161628, for example).

### SUMMARY OF THE INVENTION

However, according to the scroll control device recited in the above-mentioned Japanese Patent Application; Publication No. JP-A-10-161628, there is a case, in which the display area is not moved with one flick operation to an area of the image that the user desires to display, because the adjustment of the flick speed of the finger is limited. In such case, the user needs to perform the flick operation several times until the image that the user desires to display is displayed, which makes the scroll operation complicated.

In order to solve the above-mentioned problem, it is an object of the present invention to provide an information display device, an information display method, and a program that enable the user to display an intended image with less number of operation times without performing the flick operation a plurality of times.

To achieve the aforementioned object, an information display device according to a first aspect of the present invention is characterized by including: a display unit that displays an image; a coordinate detection unit that detects a pressed coordinate position pressed by a finger on a display screen of the display unit; a determination unit that determines the number of fingers pressing the display screen; a control volume setting unit that sets a control volume to scroll the image based on a movement direction and a movement speed of the pressed coordinate position just before pressing the display screen by the finger is cancelled and a determination result of the determination unit; and a scroll control unit that scrolls the image for the control volume set by the control volume setting unit.

The information display device according to a second aspect of the present invention is characterized in that, in the information display device according to the first aspect of the present invention, the control volume includes a scroll speed, and the control volume setting unit increases the scroll speed in accordance with an increase of the number of fingers pressing the display screen.

The information display device according to a third aspect of the present invention is characterized in that, in the information display device according to the first or second aspect of the present invention, the control volume setting unit, if the number of fingers pressing the display screen is plural, sets the control volume based on a positional relation of the pressed coordinate positions pressed by the respective fingers.

The information display device according to a fourth aspect of the present invention is characterized in that, in the information display device according to the third aspect of the present invention, the control volume setting unit, if the number of fingers pressing the display screen is plural and the pressed coordinate positions pressed by the respective fingers are far from each other by a predetermined distance or more, does not use the determination result of the determination unit to set the control volume.

The information display device according to a fifth aspect of the present invention is characterized in that, in the information display device according to the third aspect of the present invention, the control volume setting unit, if the number of fingers pressing the display screen is plural and the movement directions of the pressed coordinate positions pressed by the respective fingers differ, does not use the determination result of the determination unit to set the control volume.

The information display device according to a sixth aspect of the present invention is characterized in that, in the information display device according to the third aspect of the present invention, the control volume setting unit, if the number of fingers pressing the display screen is plural and a difference of the movement speeds of the pressed coordinate positions pressed by the respective fingers is a predetermined speed or more, does not use the determination result of the determination unit to set the control volume.

The information display device according to a seventh aspect of the present invention is characterized in that, in the information display device according to any of the first to sixth aspect of the present invention, the scroll control unit, only if the movement speed of the pressed coordinate position just before pressing the display screen of the display unit is cancelled is a predetermined speed or more, scrolls the image.

An information display method according to an eighth aspect of the present invention is characterized by including the steps of: displaying an image on a display; detecting a pressed coordinate position pressed by a finger on a display screen of the display; determining the number of fingers pressing the display screen; setting a control volume to scroll the image based on a movement direction and a movement speed of the pressed coordinate position detected at the coordinate detection step just before pressing the display screen by the finger is cancelled and a determination result determined at the determination step; and scrolling the image for the control volume set at the control volume setting step.

A program according to a ninth aspect of the present invention is a program for causing a computer to execute the functions of: displaying an image on a display; detecting a pressed coordinate position pressed by a finger on a display screen of the display; determining the number of fingers pressing the display screen; setting a control volume to scroll the image based on a movement direction and a movement speed of the pressed coordinate position detected at the coordinate detection step just before pressing the display screen by the finger is cancelled and a determination result determined at the determination step; and scrolling the image for the control volume set at the control volume setting step.
A computer-readable storage medium according to a tenth aspect of the present invention is a storage medium, wherein the program according to the ninth aspect of the present invention is stored.

In the information display device according to the first aspect of the present invention, the control volume to scroll the image is set based on the movement direction and the movement speed of the pressed coordinate position just before pressing the display screen by the finger is cancelled and the determination result of the number of fingers having pressed the display screen. Thereby, the user can change the control volume to scroll the image by changing the number of fingers in pressing the display screen to perform the flick operation. As a result, it becomes possible to display the intended image with less number of operation times.

In the information display device according to the second aspect of the present invention, the image is scrolled such that the scroll speed is increased in accordance with the increase of the number of fingers just before pressing the display screen by the finger is cancelled. Therefore, the user can move the display area to the area of the farther image with just one flick operation by increasing the number of fingers in pressing the display screen. Thereby, the user can display the image of the desired area with less number of flick operation times by increasing the number of fingers in pressing the display screen.

In the information display device according to the third aspect of the present invention, if the number of fingers pressing the display screen is plural, it is possible to set the control volume to scroll the image based on the positional relation of the pressed coordinate positions pressed by the respective fingers. Thereby, it is possible to set an appropriate control volume.

In the information display device according to the fourth aspect of the present invention, if the number of fingers pressing the display screen is plural and the pressed coordinate positions pressed by the respective fingers are far from each other by a predetermined distance or more, the number of fingers having pressed the display screen is not used to set the control volume to scroll the image. Thereby, it is possible to set the control volume to scroll the image independently of the number of fingers just before pressing the display screen by the fingers is cancelled. As a result, it becomes possible to prevent an unintended change of the control volume.

In the information display device according to the fifth aspect of the present invention, if the number of fingers pressing the display screen is plural and the movement directions of the pressed coordinate positions pressed by the respective fingers differ, the number of fingers having pressed the display screen is not used to set the control volume to scroll the image. Thereby, it is possible to set the control volume to scroll the image independently of the number of fingers just before pressing the display screen by the fingers is cancelled. As a result, it becomes possible to prevent an unintended change of the control volume.

In the information display device according to the sixth aspect of the present invention, if the number of fingers pressing the display screen is plural and a difference of the movement speeds of the pressed coordinate positions pressed by the respective fingers is a predetermined speed or more, the number of fingers having pressed the display screen is not used to set the control volume. Thereby, it is possible to set the control volume to scroll the image independently of the number of fingers just before pressing the display screen by the fingers is cancelled. As a result, it becomes possible to prevent an unintended change of the control volume.

In the information display device according to the seventh aspect of the present invention, only if the movement speed of the finger just before pressing the display screen of the display unit is cancelled is a predetermined speed or more, it is possible to scroll the image. As a result, it becomes possible to surely prevent false recognition of the flick operation.

In the information display method according to the eighth aspect of the present invention, the control volume to scroll the image is set based on the movement direction and the movement speed of the pressed coordinate position just before pressing the display screen by the finger is cancelled and the determination result of the number of fingers having pressed the display screen. Thereby, the user can change the control volume to scroll the image by changing the number of fingers in pressing the display screen to perform the flick operation. As a result, it becomes possible to display the intended image with less number of operation times.

Further, in the program according to the ninth aspect of the present invention, the computer sets, by reading the program, the control volume to scroll the image based on the movement direction and the movement speed of the pressed coordinate position just before pressing the display screen by the finger is cancelled and the determination result of the number of fingers having pressed the display screen. Thereby, the user can change the control volume to scroll the image by changing the number of fingers in pressing the display screen to perform the flick operation. As a result, it becomes possible to display the intended image with less number of operation times.

### BRIEF DESCRIPTION OF THE DRAWINGS

FIG. 1 is a block diagram showing a navigation device according to the present embodiment.

FIG. 2 is a flow chart showing inertia scroll processing to scroll a map image in a direction, in which a finger pressing a display screen has flicked.

FIG. 3 is a sub-flow chart showing sub-processing of "touch point number determination processing" in FIG. 2.

FIG. 4 is a schematic diagram showing an example of the map image and a display area displayed on the display screen.

FIG. 5 shows an example that the map image is scrolled by the flick operation with one finger.

FIG. 6 shows an example that the map image is scrolled by the flick operation with two fingers.

FIG. 7 shows an example that a flick operation with two fingers is not determined.

FIG. 8 shows an example that a flick operation with two fingers is not determined.

FIG. 9 shows an example that a flick operation with two fingers is not determined.

### DETAILED DESCRIPTION OF THE PREFERRED EMBODIMENT

An information display device, an information display method, and a program according to the present invention realized in a navigation device is described detail below with reference to an embodiment in conjunction with the accompanying drawings.

### [Schematic structure of a navigation device]

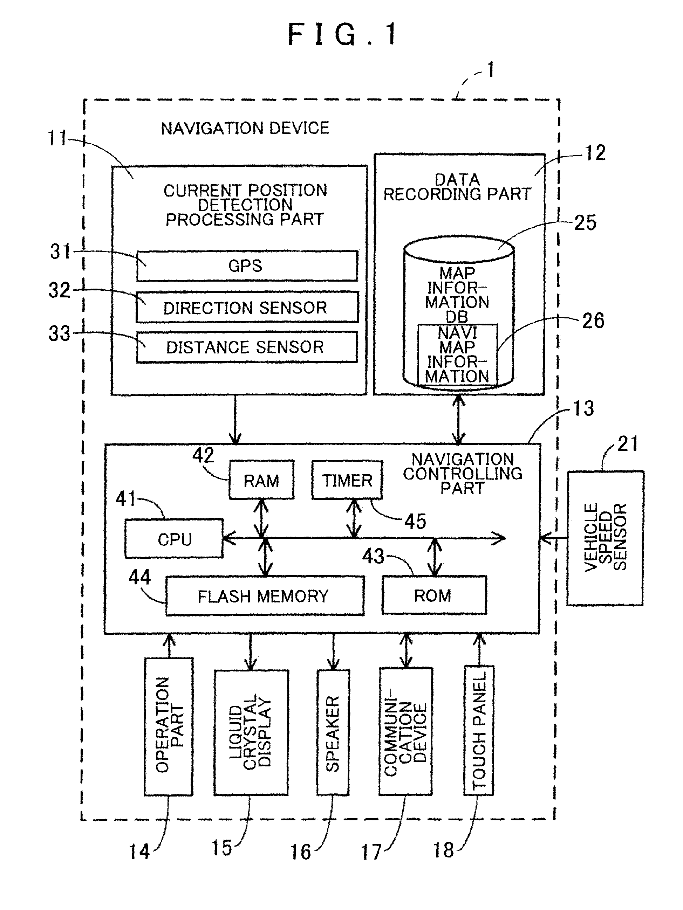

First, a schematic structure of the navigation device according to the present embodiment is described with reference to FIG. 1. FIG. 1 is a block diagram showing a navigation device 1 according to the present embodiment.
As shown in FIG. 1, the navigation device 1 according to the present embodiment includes: a current position detection processing part 11 that detects a current position of a vehicle, and the like; a data recording part 12 in which various data is recorded; a navigation controlling part 13 that executes various computing processing based on input information; an operation part 14 that receives operation from an operator; a liquid crystal display 15 that displays a map and various information to the operator; a speaker 16 that outputs audio guidance relating to route guidance and the like; a communication device 17 that performs communication with a road traffic information center (not shown), a map information delivery center (not shown), and the like through a cellular phone network or the like; and a touch panel 18 installed in front of the liquid crystal display 15. In addition, the navigation controlling part 13 is connected with a vehicle speed sensor 21 that detects a travel speed of the vehicle.

Hereinafter, the respective components composing the navigation device 1 are described. The current position detecting part 11 is formed of a GPS 31, a direction sensor 32, a distance sensor 33, and the like, and can detect the current position of the vehicle (hereinafter referred to as a "vehicle position") and a vehicle direction that represents a direction of the vehicle, a travel distance, and the like.

The data recording part 12 is provided with a hard disk (not shown) serving as an external storage device and a recording medium, and a driver (not shown) for reading a map information database (a map information DB) 25, a predetermined program and the like that are stored in the hard disk, and writing predetermined data in the hard disk.

In the map information DB 25, navi map information 26 used for travel guidance and route search of the navigation device 1 is recorded. The navi map information 26 is formed of various information required for conducting route guidance and for displaying a map. For example, the navi map information 26 is formed of newly-constructed road information for identifying respective newly-constructed roads, map display data for displaying the map, intersection data regarding respective intersections, node data regarding node points, link data regarding roads (links), search data for searching for routes, shop data regarding POIs (Point of Interest) such as shops that are a kind of facilities, search data for searching for points, and the like.

In addition, for the shop data, data such as names, addresses, telephone numbers, coordinate positions on the map (for example, latitudes and longitudes), facility icons for displaying the positions of the facilities on the map, and the like regarding the POIs is stored together with IDs to identify the POIs. The POIs include hotels in respective regions, amusement parks, palaces, hospitals, gas stations, parking lots, stations, airports, ferry ports, and the like.
In addition, contents of the map information DB 25 are updated by downloading update information delivered from the map information delivery center (not shown) through the communication device 17.

As shown in FIG. 1, the navigation controlling part 13 composing the navigation device 1 is provided with: a CPU 41 serving as a computing device and a control device for performing overall control of the navigation device 1; internal storage devices such as a RAM 42 used as a working memory when the CPU 41 executes various computing processing and in which route data or the like when the route has been searched is stored, a ROM 43 which records a program for control, and a flash memory 44 which records a program read from the ROM 43; a timer 45 for measuring a time; and the like.

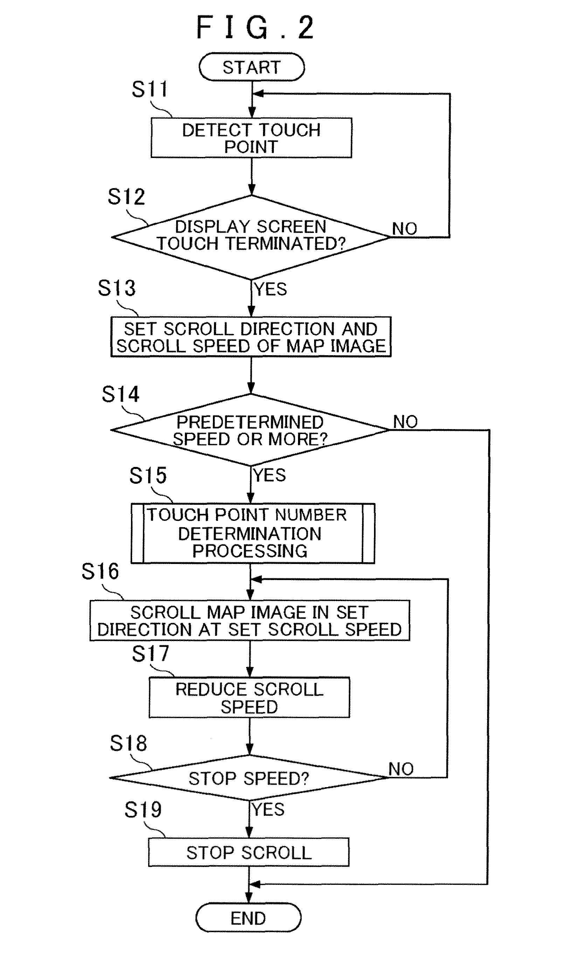

In addition, the ROM 43 stores a program such as inertia scroll processing (refer to FIG. 2) for scrolling a map image in a flick direction of a finger if a user has pressed and flicked a display screen of the liquid crystal display 15 by a finger as mentioned later, that is, if the user has performed a flick operation.
Further, the navigation controlling part 13 is electrically connected to respective peripheral devices (an actuator) such as the operation part 14, the liquid crystal display 15, the speaker 16, the communication device 17, and the touch panel 18.

The operation part 14 is operated when changing the current position at the time of starting travel and inputting a departure point as a guidance start point and a destination as a guidance end point, or when performing search for information relating to a facility, and is configured with various keys and a plurality of operation switches. The navigation controlling part 13 performs control to execute various operations according to a switch signal outputted by the operation such as pressing of each switch.

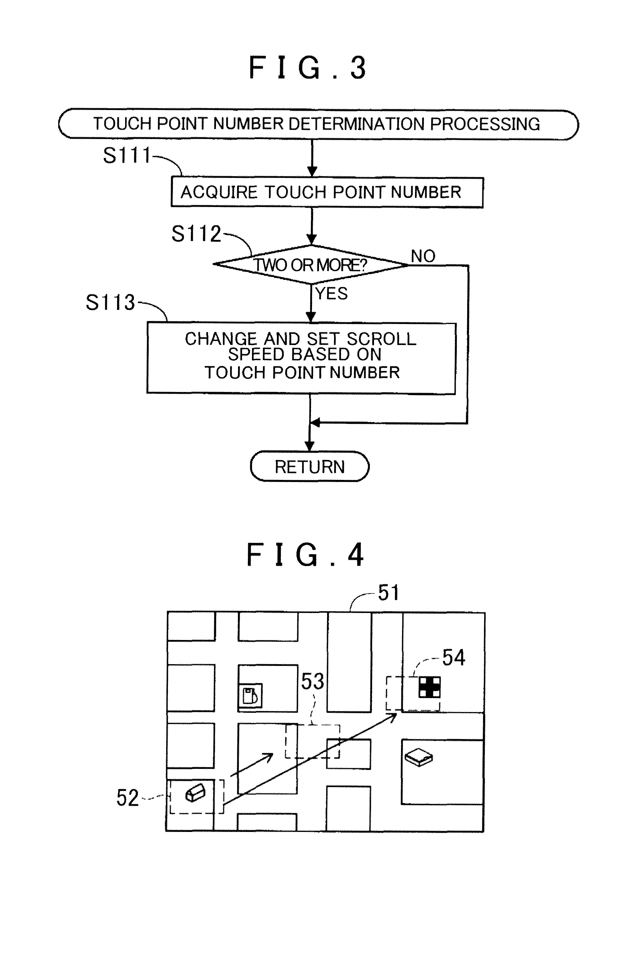

On the liquid crystal display 15, map information of currently-traveling area (refer to FIG. 4), map information of the vicinity of the destination, operation guidance, a operation menu, key guidance, a recommended route from the current position to the destination, guidance information along the recommended route, traffic information, news, weather forecast, time, E-mail, TV programs, and the like are displayed.

The speaker 16 outputs audio guidance for traveling along the recommended route based on an instruction from the navigation controlling part 13, and the like. For example, the audio guidance as "200m ahead, to the right direction at XX intersection." is provided.

The communication device 17 is a communication unit such as a cellular phone that performs communication with the map information delivery center. The communication device 17 transmits and receives the latest version of the update map information to and from the map information delivery center. In addition, the communication device 17 receives the traffic information including respective information such as congestion information, congestion status of a service area, and the like, each of which is transmitted from the road traffic information center or the like, in addition to the map information delivery center.

The touch panel 18 is a transparent panel-type touch switch provided on the surface of the liquid crystal display 15, and configured such that various kinds of instruction commands can be inputted by pressing a button or the map displayed on a screen of the liquid crystal display 15, and a movement direction and a movement speed of the finger, the number of fingers having pressed a display screen, and the like can be detected if the display screen has been pressed and flicked by the finger as described below. The touch panel 18 may be configured with an optical sensor type liquid crystal where the screen of the liquid crystal display 15 is directly pressed.

### [Inertia scroll processing]

Next, the inertia scroll processing, which is processing executed by the CPU 41 of the navigation device 1 configured as above, is described with reference to FIGS. 2 to 6. The inertia scroll processing is processing for scrolling the map image in the flick direction of the finger if the user has pressed and flicked the display screen of the liquid crystal display 15 by the finger, that is, if the user has performed the flick operation. The program shown in a flowchart in FIG. 2 is executed by the CPU 41.

As shown in FIG. 2, first, at Step (hereinafter referred to as "S") 11, the CPU 41 detects a pressing coordinate position (hereinafter referred to as a "touch coordinate") where the touch panel 18 has been pressed, and the number of fingers pressing the touch panel 18, that is, the number of touch points at which a pressing finger or fingers is touching the touch panel 18, and stores such information in the RAM 42.

Subsequently, at S12, the CPU 41 executes determination processing to determine whether or not pressing the touch panel 18 by the finger has been cancelled, that is, pressing the display screen by the finger has been cancelled. If the CPU 41 has determined that pressing the display screen by the finger is not cancelled, that is if the CPU 41 has determined that pressing the touch panel 18 by the finger continues (S12: NO), the CPU 41 re-executes processing at S11 and subsequent processing.

On the other hand, if the CPU 41 has determined that pressing the display screen by the finger has been cancelled, that is, if the CPU 41 has determined that the finger has been released from the touch panel 18 (S12: YES), the CPU 41 transits the processing to S13. At S13, the CPU 41 sets a scroll direction and a first speed of a scroll speed to scroll the map image based on the movement direction and the movement speed at the touch coordinate just before pressing the display screen by the finger is cancelled.

Specifically, the CPU 41 detects the touch coordinate and the number of touch points of the touch panel 18 at a predetermined time interval (for example, at 20-seconds interval) and stores the data for the previous several times (for example, the data for the previous 10 times) in the RAM 42. The CPU 41 calculates the movement direction and the movement speed of the touch coordinate on the display screen based on the touch coordinate just before pressing the touch panel 18 by the finger is cancelled and one earlier touch coordinate, sets the scroll direction and the scroll speed to scroll the map image respectively, and stores the set scroll direction and the scroll speed in the RAM 42.

Subsequently, at S14, the CPU 41 reads the scroll speed to scroll the map image from the RAM 42 and executes the determination processing to determine whether or not the scroll speed is equal to or more than a predetermined speed, that is, whether or not the finger pressing the touch panel 18 has moved and flicked at the predetermined speed or more. For example, if the resolution of the display screen is 800 x 600 dots, the CPU 41 determines whether or not the scroll speed is 300 dots/sec or more.

If the CPU 41 has determined that the scroll speed to scroll the map image that is read from the RAM 42 is less than the predetermined speed (S14: NO), the CPU 41 terminates the processing. For example, if pressing of the touch panel 18 is cancelled by moving straight up the finger, the movement speed of the touch coordinate on the touch panel 18 is less than the predetermined speed, that is, the scroll speed is less than the predetermined speed. Therefore, the map image is stopped and displayed.

On the other hand, if the CPU 41 has determined that the scroll speed to scroll the map image that is read from the RAM 42 is the predetermined speed or more (S14: YES), the CPU 41 transits the processing to S15 to execute an after-mentioned sub-processing of touch point number determination processing (refer to FIG. 3) and transits the processing to S16.

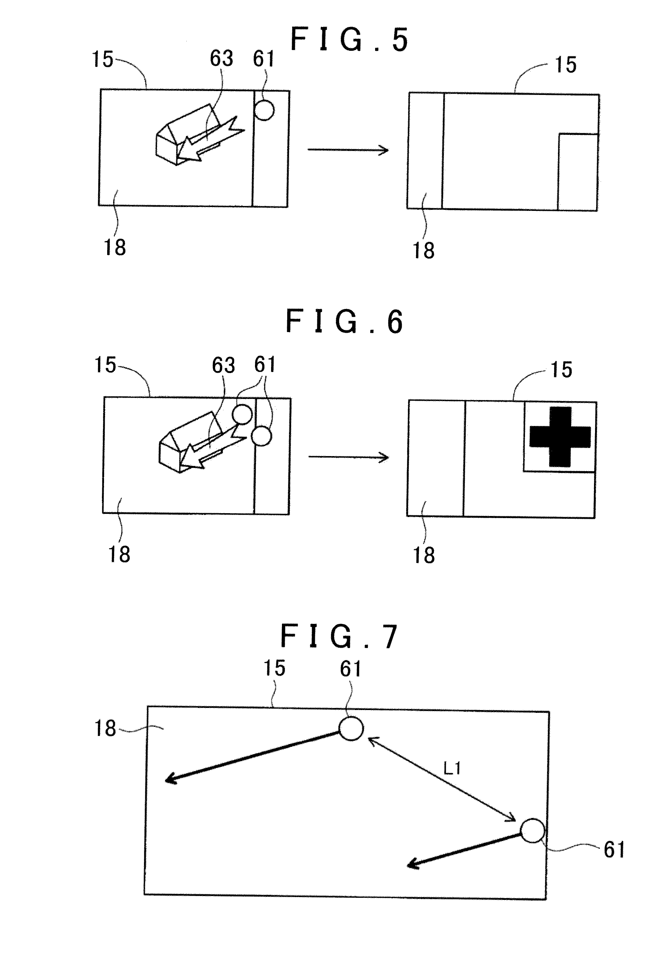

Here, the sub-processing of the touch point number determination processing executed by the CPU 41 at S15 is described with reference to FIGS. 3, 5, and 6.
As shown in FIG. 3, at S111, the CPU 41 detects the number of fingers that was pressing the touch panel 18 just before pressing the touch panel 18 by the finger is cancelled, that is, the number of touch points at which the pressing finger was touching the touch panel 18. Here, the touch point is the touch point 61 at which the finger is touching the touch panel 18, as indicated on the left side of FIG. 5 for example. If the touch point 61 is one point, it is stored in RAM 42 that the number of touch points is one. In addition, as indicated on the left side of FIG. 6 for example, if the touch points 61 are two points, it is stored in RAM 42 that the number of touch points, that is, the number of fingers pressing the touch panel 18 is two.

Subsequently, at S112, the CPU 41 reads the number of touch points from the RAM 42 and executes determination processing to determine whether or not the number of touch points is two points or more. If the CPU 41 has determined that the number of touch points is less than two points, that is, one point (S112: NO), the CPU 41 terminates the sub-processing, returns to a main flow chart, and transits the processing to S 16.

On the other hand, if the CPU 41 has determined that the number of touch points is two points or more (S112: YES), the CPU 41 transits the processing to S113. At S113, the CPU 41 reads the scroll speed of the map image set at the above-mentioned S 13 from the RAM 42, re-sets the scroll speed so as to be faster than that if the number of touch points is one point, and re-stores the set scroll speed in the RAM 42. Thereafter, the CPU 41 terminates the sub-processing, returns to the main flow chart, and transits the processing to S16.

For example, if the number of touch points is two points, the CPU 41 doubles the scroll speed of the map image set at the above-mentioned S13 and stores the doubled speed as the scroll speed of the map image in the RAM 42. In addition, if the number of touch points is three points for example, the CPU 41 triples the scroll speed of the map image set at the above-mentioned S13 and stores the tripled scroll speed as the scroll speed of the map image in the RAM 42.

Subsequently, as shown in FIG. 2, at S16, the CPU 41 reads from the RAM 42 the scroll direction to scroll the map image and either the scroll speed set at the above-mentioned S13/S113 or the scroll speed re-set by reducing the current scroll speed by a predetermined scroll speed at an after-mentioned S17, and scrolls the map image in the read scroll direction at the read scroll speed for a predetermined time period (for example, 10 msec.)(hereinafter referred to as an "inertia scroll").

At S17, the CPU 41 reads the scroll speed to scroll the map image from the RAM 42, reduces the read scroll speed by a predetermined speed (for example, 30 dots/sec.), and re-stores the reduced scroll speed as the scroll speed to scroll the map image in the RAM 42. That is, the CPU 41 reduces the scroll speed of the inertia scroll.

Subsequently, at S18, the CPU 41 reads the scroll speed to scroll the map image from the RAM 42, that is, reads the scroll speed of the inertial scroll, and executes determination processing to determine whether or not the read scroll speed is a stop speed. Specifically, the CPU 41 executes determination processing to determine whether or not the scroll speed is 0 dots/sec. or less.

If the scroll speed to scroll the map image, that is, the scroll speed of the inertial scroll is not the stop speed (S18: NO), the CPU 41 re-executes the processing at S16 and subsequent processing.
On the other hand, if the scroll speed to scroll the map image, that is, the scroll speed of the inertial scroll is the stop speed (S18: YES), the CPU 41 transits the processing to S19. At S19, the CPU 41 stops the inertial scroll of the map image and terminates the processing.

Here, an example that the map image is inertia-scrolled is described with reference to FIGS. 4 to 6. As shown in FIG. 4, the map image 51 to be displayed on the liquid crystal display 15 is determined by the current display area 52 of the liquid crystal display 15. For example, the CPU 41 reads the map information for the area approximately five to seven times as large as the current display area 52, that is displayed on the liquid crystal display 15, centering at the touch coordinate of the touch panel 18, from the navi map information 26, draws the map image 51 based on the map information, and stores the drawn map image 51 in the RAM 42.

As shown on the left side of FIG.5, when pressing the touch panel 18 with one finger, if the finger flicks from the position of the touch point 61 in a direction of an arrow 63, the CPU 41 sets the scroll direction and the scroll speed of the map image 51 based on the movement direction and the movement speed of the touch coordinate when pressing the display screen has been cancelled (for example, the CPU 41 sets the movement direction of the touch coordinate as the scroll direction of the map image 51 and the movement speed of the touch coordinate as the scroll speed). Thereafter, the CPU 41 inertia-scrolls the map image 51, and moves the area to display on the liquid display 15 from the position of the display area 52 to the position of the display area 53, as shown on the right side of FIG. 4 and 5.

In addition, as shown on the left side of FIG. 6, when pressing the touch panel 18 with two fingers, if the two fingers flick from the position of the respective touch points 61 in the direction of the arrow 63 in the same manner as the left side of FIG. 5, the CPU 41 sets the scroll direction of the map image 51 and sets the scroll speed so as to be faster than when flicking with one finger, based on the movement direction and the movement speed of the touch coordinate when pressing the display screen has been cancelled (for example, the CPU 41 sets the doubled speed of the movement speed of the touch coordinate as the scroll speed).

If three or more fingers press and flick the touch panel 18, the CPU 41 sets the scroll speed so as to be faster than when flicking with two fingers. For example, the CPU 41 sets as the scroll speed the speed acquired by multiplying the movement speed of the touch coordinate by the number of touch points.

As shown on the right side of FIGS. 4 and 6, the CPU 41 inertia-scrolls the map image 51 to move the area to display on the liquid crystal display 15 from the position of the display area 52 to the position of the display area 54 that is farther than the display area 53. Consequently, when the user presses the touch panel 18 and flicks in the direction of the arrow 63 with two fingers, it is possible to move the map image to be displayed from the position of the display area 52 to the position of the display area 54 that is farther than the display area 53 with one time flick operation even if the speed of the flick operation is almost the same as the speed of the flick operation with one finger.

As described in detail above, in the navigation device 1 according to the present embodiment, by pressing and flicking the display screen of the liquid crystal display 15 with two fingers, the user is able to largely inertia-scroll the map image to be displayed with one flick operation in the direction in which the fingers have flicked compared to when pressing and flicking the display screen with one finger, even when there is no difference in the speed of the flick operation with finger.

Thereby, the user is able to display an intended map image with a few times of operation by performing the flick operation with two or more fingers without performing the flick operation a plurality of times.
In addition, it is possible to make the CPU 41 scroll the image only if the movement speed of the touch coordinate when pressing the touch panel 18 by the fingers has been canceled, that is, the scroll speed is a predetermined speed or more. As a result, it becomes possible to surely prevent false recognition of the flick operation.

Note that the present invention is not limited to the above-mentioned embodiment, but various modifications and/or variations may be made without departing from the broad spirit and scope of the underlying principles.
For example, in the above-mentioned embodiment, if two or more fingers press and flick the touch panel 18, the control volume such as the scroll speed to inertia-scroll the image displayed on the liquid crystal display may be set based on a positional relation of the touch coordinates of the respective fingers, that is, the positional relation of the respective touch points.

(A) For example, in the above-mentioned embodiment, as shown in FIG. 7, if two fingers press and flick the touch panel 18, a distance L1 between the respective touch coordinates just before pressing the touch panel 18 is cancelled, that is, the distance L1 between the respective touch points 61 at which the two fingers touch the touch panel 18 is a predetermined distance or more (for example, the distance is 4 cm or more), the CPU 41 may not execute the processing at the above-mentioned S113 but terminate the sub-processing of the touch point number determination processing. Thereafter, the CPU 41 may return to the main flow chart and transit the processing to S16. That is, the scroll speed to inertia-scroll the map image may be set to the same scroll speed as that when one finger presses and flicks the touch panel 18.

Thereby, if the number of fingers at the flick operation (the number of touch coordinates) is plural and the positions of the respective touch coordinates are far from each other by a predetermined distance or more, it is possible to make the CPU 41 set the scroll speed to inertia-scroll the map image independently of the number of fingers at the flick operation. As a result, it becomes possible to surely prevent an unintended change of the scroll speed.

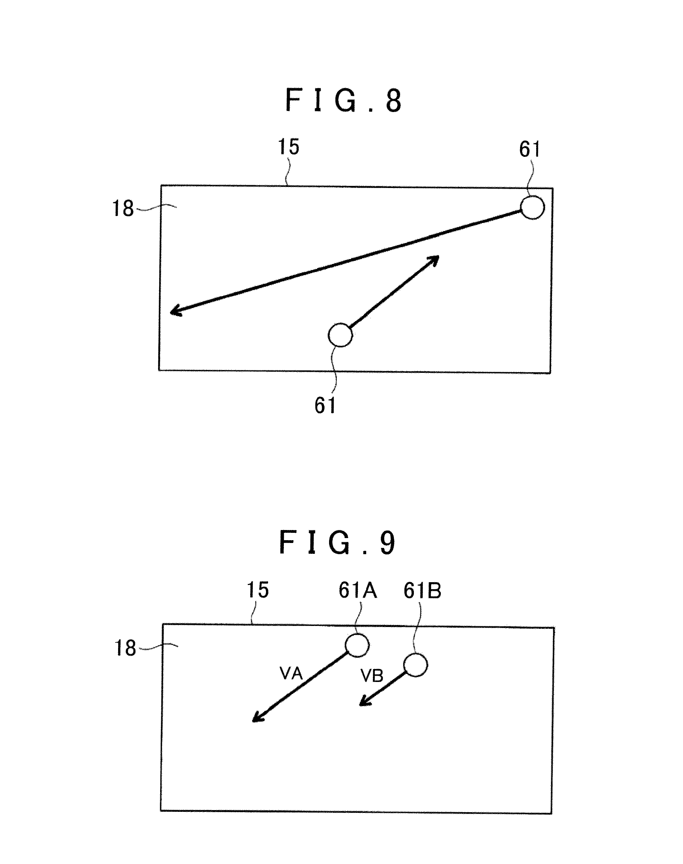

(B) In addition, for example, in the above-mentioned embodiment, as shown in FIG. 8, if the movement directions of the respective touch coordinates when pressing by two fingers has been cancelled, which was acquired at the above-mentioned S13, differ, that is, if the movement directions of the respective touch points 61, at which the two fingers touch the touch panel 18, differ, more specifically, if it is determined that the movement directions are not almost the same, the CPU 41 may not transit the processing to the above-mentioned S14, but terminate the inertia scroll processing.

Further, if the movement directions of three or more touch coordinates acquired at the above-mentioned S13 differ, that is, if it is determined that the movement directions of three or more touch coordinates are not almost the same, the CPU 41 may not transit the processing to the above-mentioned S14, but terminate the inertia scroll processing.

Thereby, if the number of fingers at the flick operation (the number of touch coordinates) is plural and the movement directions of the respective touch coordinates differ, it is possible not to inertia-scroll the map image displayed on the liquid crystal display 15 but to display stopped image. As a result, it becomes possible to surely prevent an unintended inertia-scroll of the map image.

(C) In addition, for example, in the above-mentioned embodiment, as shown in FIG. 9, if it is determined that a difference of the movement speeds of the respective touch coordinates when pressing by two fingers has been cancelled, which were acquired at the above-mentioned S13, that is, a difference between a movement speed VA (cm/sec) of a touch point 61A at which one finger touches the touch panel 18 and a movement speed VB (cm/sec) of a touch point 61B at which the other finger touches the touch panel 18 is a predetermined speed or more (for example, 10cm/sec or more), the CPU 41 may set the movement speed that is faster between the respective movement speeds VA and VB as the scroll speed to inertia-scroll the map image and store the set scroll speed in the RAM 42. In addition, the CPU 41 may not execute the processing at the above-mentioned S113, but terminate the sub-processing of the touch number determination processing. Thereafter, the CPU 41 may return to the main flow chart, and transit the processing to S16.

Further, if it is determined that the difference between the maximum movement speed and the minimum movement speed of the respective three or more touch coordinates, which were acquired at the above-mentioned S13, is a predetermined speed or more, that is, if the movement speeds of the respective touch coordinates are not almost the same, the CPU 41 may set the fastest movement speed among the respective movement speeds as the scroll speed to inertia-scroll the map image and store the set scroll speed in the RAM 42. In this case, the CPU 41 may not execute the processing at the above-mentioned S113, but terminate the sub-processing of the touch point number determination processing. Thereafter, the CPU 41 may return to the main flow chart, and transit the processing to S16.

Thereby, if the number of fingers at the flick operation (the number of touch coordinates) is plural and the difference of the movement speeds of the respective touch coordinates is a predetermined speed or more, it is possible to set the maximum movement speed among the movement speeds of the respective touch coordinates as the scroll speed to inertia-scroll the map image displayed on the liquid crystal display 15. As a result, it becomes possible to surely prevent an unintended change of the scroll speed.

(D) In addition, for example, in the above-mentioned embodiment, if there are a lot of destinations searched based on the map information and lists of the destinations are over the display screen, a list display of the destinations may be inertia-scrolled by pressing and flicking the touch panel 18 with one or more fingers. The present invention can be applied to such case.

(E) In addition, the present invention can be applied to small size portable electric devices such as cellular phones, portable music players, and the like, which have a small display screen provided with the touch panel 18 and the like. For example, the present invention can be applied to the inertia-scroll of the list display such as various kinds of menu lists and title lists, various icons, and the like by pressing and flicking with one or more fingers the touch panel 18 provided to the display screen of the cellular phones and the portable music players.

(F) In addition, for example, at the above-mentioned S113, the CPU 41 may read the scroll speed of the map image set at the above-mentioned S13 from the RAM 42, re-set the scroll speed so as to be slower compared to when the number of touch points is one, store the re-set scroll speed in the RAM 42, thereafter terminate the sub-processing, return to the main flow chart, and transit the processing to S16.

For example, if the number of touch points is two, the CPU 41 may reduce the scroll speed of the map image set at the above-mentioned S13 to one-half and re-store it as the scroll speed of the map image in the RAM 42. In addition, for example, if the number of touch points is three, the CPU 41 may reduce the scroll speed of the map image set at the above-mentioned S13 to one-third and re-store it as the scroll speed of the map image in the RAM 42. That is, the CPU 41 may set as the scroll speed the speed acquired by dividing the movement speed of the touch coordinate by the number of touch points.

Thereby, by pressing and flicking the display screen of the liquid display 15 with two or more fingers, the user can reduce scroll amount by the inertia-scroll of the map image displayed by one flick operation compared to when pressing and flicking the display screen with one finger, even when there is no difference in the speed of the flick operation with finger. Consequently, the user can display an intended map image with less number of operation times without performing the flick operation a plurality of times, by pressing and flicking the display screen of the liquid crystal display 15 with two or more fingers and subtly adjusting the movement distance of display area of the map image.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

## Claims

1. An information display device, comprising:
a display unit (15) that displays an image (51);
a coordinate detection unit that detects a pressed coordinate position (61, 61A, 61B) pressed by a finger on a display screen (18) of the display unit (15);
a determination unit that determines the number of fingers pressing the display screen(18);
a control volume setting unit that sets a control volume to scroll the image (5 1) based on a movement direction and a movement speed (VA, VB) of the pressed coordinate position (61, 61A, 61B) just before pressing the display screen (18) by the finger is cancelled and a determination result of the determination unit; and
a scroll control unit that scrolls the image (51) for the control volume set by the control volume setting unit.

2. The information display device according to claim 1, wherein
the control volume includes a scroll speed, and
the control volume setting unit increases the scroll speed in accordance with an increase of the number of fingers pressing the display screen (18).

3. The information display device according to claim 1 or 2, wherein
the control volume setting unit, if the number of fingers pressing the display screen (18) is plural, sets the control volume based on a positional relation of the pressed coordinate positions (61, 61A, 61B) pressed by the respective fingers.

4. The information display device according to claim 3, wherein
the control volume setting unit, if the number of fingers pressing the display screen (18) is plural and the pressed coordinate positions (61, 61A, 61B) pressed by the respective fingers are far from each other by a predetermined distance or more, does not use the determination result of the determination unit to set the control volume.

5. The information display device according to claim 3, wherein
the control volume setting unit, if the number of fingers pressing the display screen (18) is plural and the movement directions of the pressed coordinate positions (61, 61A, 61B) pressed by the respective fingers differ, does not use the determination result of the determination unit to set the control volume.

6. The information display device according to claim 3, wherein
the control volume setting unit, if the number of fingers pressing the display screen (18) is plural and a difference of the movement speeds (VA, VB) of the pressed coordinate positions (60, 61A, 61B) pressed by the respective fingers is a predetermined speed or more, does not use the determination result of the determination unit to set the control volume.

7. The information display device according to any of claims 1 to 6, wherein the scroll control unit, only if the movement speed (VA, VB) of the pressed coordinate position (61, 61A, 61B) just before pressing the display screen (18) of the display unit (15) is cancelled is a predetermined speed or more, scrolls the image (51).

8. An information display method comprising the steps of:
displaying an image (51) on a display (15);
detecting a pressed coordinate position (61, 61A, 61B) pressed by a finger on a display screen (18) of the display (15);
determining the number of fingers pressing the display screen (18);
setting a control volume to scroll the image (51) based on a movement direction and a movement speed (VA, VB) of the pressed coordinate position (61, 61A, 61B) detected at the coordinate detection step just before pressing the display screen (18) by the finger is cancelled and a determination result determined at the determination step; and
scrolling the image (51) for the control volume set at the control volume setting step.

9. A program causing a computer to execute the functions of:
displaying an image (51) on a display (15);
detecting a pressed coordinate position pressed by a finger on a display screen (18) of the display (15);
determining the number of fingers pressing the display screen (18);
setting a control volume to scroll the image (51) based on a movement direction and a movement speed (VA, VB) of the pressed coordinate position (61, 61A, 61B) detected at the coordinate detection step just before pressing the display screen (18) by the finger is cancelled and a determination result determined at the determination step; and
scrolling the image (51) for the control volume set at the control volume setting step.

10. A computer-readable storage medium that stores the computer-executable instructions of:
displaying an image (51) on a display (15);
detecting a pressed coordinate position pressed by a finger on a display screen (18) of the display (15);
determining the number of fingers pressing the display screen (18);
setting a control volume to scroll the image (51) based on a movement direction and a movement speed (VA, VB) of the pressed coordinate position (61, 61A, 61B) detected at the coordinate detection instruction step just before pressing the display screen (18) by the finger is cancelled and a determination result determined at the determination instruction step; and
scrolling the image (51) for the control volume set at the control volume setting instruction step.
